# FASCICULE DE BREVET EUROPEEN

(11) **EP 2 448 814 B1**
(45) Date de publication et mention de la délivrance du brevet: **05.09.2018**
(21) Numéro de dépôt: 10734191.9
(22) Date de dépôt: 02.07.2010
(51) Int. Cl.: B64C 1/12, B64C 1/06

(54) **ELEMENT DE FUSELAGE COMPORTANT UN TRONCON DE FUSELAGE ET DES MOYENS DE JONCTION**
RUMPFELEMENT MIT EINEM RUMPFSEGMENT UND ÜBERGANGSVORRICHTUNG
FUSELAGE ELEMENT COMPRISING A FUSELAGE SEGMENT AND JUNCTION MEANS

(30) Priorité: 03.07.2009 FR 0954626
(43) Date de publication de la demande: 09.05.2012
(73) Titulaire: Airbus Operations, 31060 Toulouse (FR)
(72) Inventeur: GALLANT, Guillaume, F-31480 Lareole (FR); DELAHAYE, Romain, F-31770 Colomiers (FR); DUGERIE, Marc, F-32430 Encausse (FR); CASTANET, Marc-Antoine, F-31830 Plaisance du Touch (FR)
(74) Mandataire: Santarelli
(86) Numéro de dépôt international: PCT/FR2010/000489
(87) Numéro de publication internationale: WO 2011/001050

(56) Documents cités:
- EP-A1- 1 541 464
- WO-A2-2010/004157
- FR-A1- 2 906 008
- FR-A1- 2 915 458

## Description

La présente invention concerne un élément fuselage.

Plus particulièrement, elle concerne un élément de fuselage comportant un tronçon de fuselage et des moyens de jonction aptes à raccorder le tronçon de fuselage à un tronçon adjacent.

Le fuselage d'un aéronef comporte notamment une peau et des raidisseurs de cette peau. Les raidisseurs sont disposés soit dans une direction longitudinale (connus comme lisses), soit dans un plan transversal à l'axe du fuselage (connus comme cadres).

Le fuselage comporte généralement plusieurs tronçons de fuselage assemblés entre eux. Ces tronçons de fuselage sont assemblés au moyen de jonctions. L'objectif des jonctions est notamment de transférer les charges mécaniques entre tronçons adjacents.

De manière générale, le fuselage, ainsi que les jonctions, présentent une forme cylindrique, bien que d'autres formes puissent être envisagées.

Il existe des jonctions qui sont conçues de manière à assurer la continuité des lisses. Le document FR 2 910 874 décrit des jonctions ainsi conçues.

Ces jonctions comportent des éléments mécaniques de jonction tels qu'une virole et des éclisses de lisses. La virole permet de relier les peaux des deux tronçons adjacents et les éclisses de lisses permettent de relier les lisses ou raidisseurs longitudinaux.

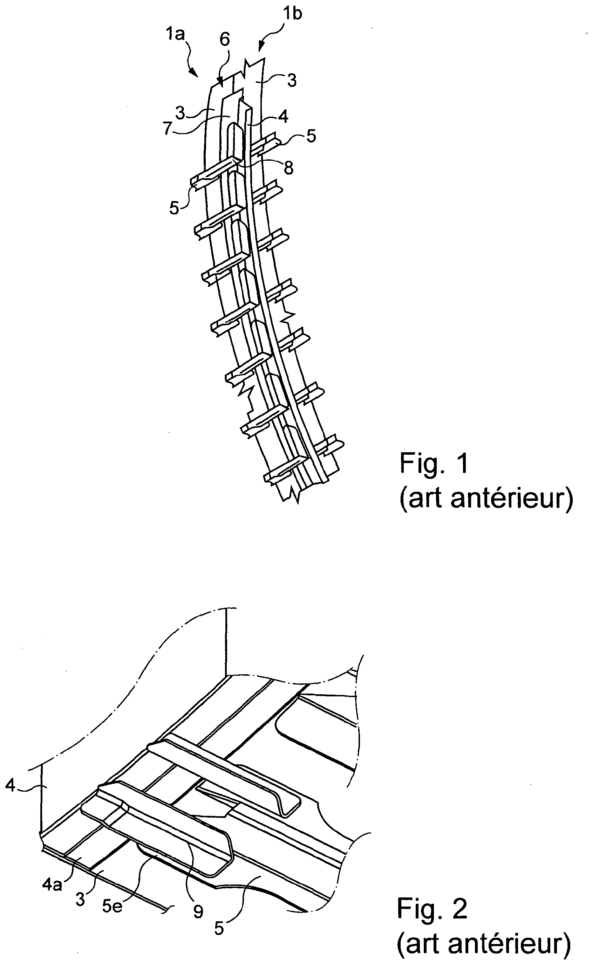

Un exemple d'une telle conception est représenté à la figure 1. Cette figure représente deux tronçons de fuselage 1a, 1b adjacents. Le fuselage présente une forme cylindrique et comporte une peau 3, ainsi qu'un cadre 4 situé dans un plan transversal au fuselage et des lisses 5 situées dans un plan longitudinal. Une jonction cylindrique 6 est disposée entre ces deux tronçons cylindriques de fuselage 1a, 1b au niveau du cadre 4. Cette jonction 6 comporte une virole 7, située sur la surface intérieure de la peau 3 du fuselage et reliant les peaux 3 des deux tronçons 1a, 1b, ainsi que des éclisses de lisses 8 situées respectivement sur les lisses 5 et reliant les lisses 5 des deux tronçons 1a, 1b.

D'autres types de jonctions ne visent pas la continuité des lisses, c'est-à-dire que les lisses d'un tronçon de fuselage s'arrêtent au niveau de la jonction et ne sont pas reliées aux lisses du tronçon adjacent.

L'absence de continuité des lisses au niveau des jonctions, peut provoquer des problèmes de stabilité locale du fait que la continuité des lisses est interrompue et des moments secondaires sont générés dans la zone de transition entre le cadre et les extrémités des lisses. Ainsi, par exemple, lors d'une traction ou compression appliquée, la peau est sollicitée et le cadre l'est également dû aux moments secondaires.

Dans ce contexte, le cadre constitue un point d'appui plus efficace lorsqu'il est situé au plus proche du point d'arrêt des lisses. C'est ainsi que la charge mécanique est transmise le plus efficacement entre deux tronçons de fuselage adjacents.

Ainsi, une solution (représentée à la figure 2) consiste à rajouter respectivement des petites éclisses 9 de lisses chevauchant entre les extrémités 5e des lisses 5 et la semelle 4a du cadre 4 (partie du cadre 4 en appui sur la peau 3 du fuselage).

Dans la solution de la figure 1, des difficultés d'assemblage peuvent être rencontrées lorsque les lisses 5 à relier au moyen de l'éclisse de lisse 8 ne sont pas parfaitement alignées entre elles.

Concernant la figure 2, une telle solution entraîne une augmentation du nombre de pièces à installer lors de l'assemblage du fuselage. On notera que le nombre de pièces est dans ce cas le double du nombre nécessaire lorsque les éclisses de lisses sont employées dans le cas de jonctions avec continuité des lisses.

Une solution similaire est divulguée par le document FR2906008 dans lequel les éclisses de lisse traversent le cadre.

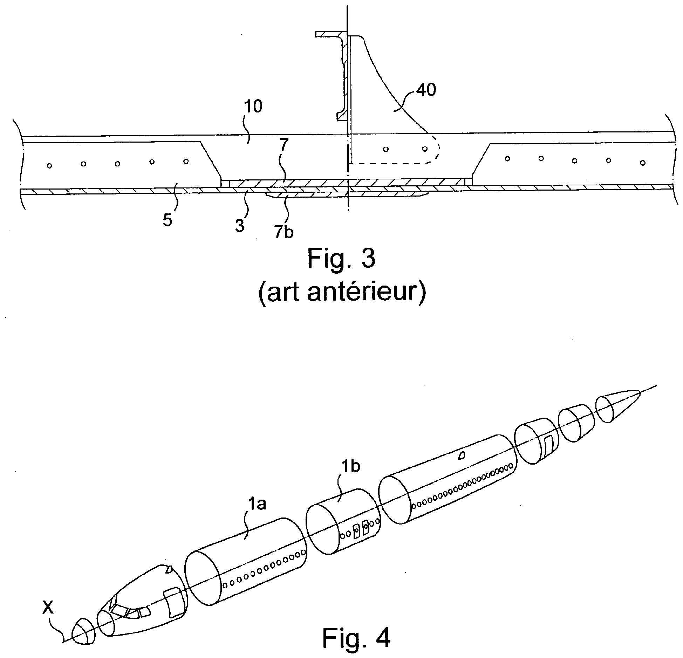

Une autre solution (représentée à la figure 3) adoptée dans le but d'augmenter la capacité de transfert d'un effort de la jonction, consiste à une contre-éclisse 10 reliant les lisses 5. En outre, afin de stabiliser le cadre 4, un stabiliseur de cadre 40 est intégré dans cette structure. Dans certains modes de réalisation, il est possible de situer une seconde virole 7b sur la surface extérieure de la peau 3, en plus de la virole interne 7.

Néanmoins, comme pour la solution précédente, le nombre de pièces est augmenté, et cela implique une plus grande complexité d'assemblage, ainsi qu'une augmentation de la masse du fuselage.

En outre, dans le cas de la présence d'une virole sur la surface extérieure de la peau, celle-là peut entraîner des perturbations aérodynamiques.

Par ailleurs, dans ces différents cas, la présence de la virole interne éloigne les lisses du cadre ce qui affaiblit la structure mécanique de l'ensemble et peut obliger comme indiqué ci-dessus à prévoir des éclisses pour assurer la continuité de cette structure.

La présente invention a pour but de résoudre les inconvénients précités et de proposer un élément de fuselage comportant un tronçon de fuselage et un élément de jonction entre ce tronçon et un tronçon adjacent, permettant d'éviter les perturbations aérodynamiques au niveau de l'élément de jonction tout en réduisant la complexité de l'assemblage et limitant l'augmentation de masse.

A cet effet, la présente invention vise, selon un premier aspect, un élément de fuselage comportant un tronçon de fuselage comportant une peau, et des moyens de jonction aptes à raccorder la peau dudit tronçon à un tronçon adjacent, ledit tronçon s'étendant le long de l'axe longitudinal du fuselage, et la peau comportant au moins une première section, à au moins une extrémité dudit tronçon, le tronçon de fuselage comportant au moins un élément longitudinal raidisseur du fuselage, les moyens de jonction comportant un élément de jonction destiné à relier le tronçon de fuselage au tronçon adjacent, l'élément de jonction étant placé au contact d'une surface extérieure de ladite première section de la peau et l'élément longitudinal raidisseur étant une lisse s'étendant en partie au niveau de l'élément de jonction selon l'axe longitudinal, les projections respectives, sur l'axe longitudinal, de la lisse et de l'élément de jonction se chevauchant en partie.

Ainsi, du fait de la disposition des moyens de jonction sur la surface extérieure de la peau du fuselage, les éléments raidisseurs (en pratique des lisses) de deux tronçons voisins peuvent s'approcher, ce qui confère une bonne structure mécanique, même sans éclisse. Par conséquent, la charge mécanique est transmise efficacement entre les deux tronçons de fuselage adjacents et la stabilité au niveau des moyens de jonction est ainsi améliorée, par rapport à des jonctions de l'état de la technique avec arrêt de raidisseurs longitudinaux au niveau de l'élément de jonction.

En outre, on peut prévoir que la peau comporte une seconde section qui n'est pas en contact avec les moyens de jonction et que la surface extérieure de ladite au moins une première section de la peau est décalée transversalement vers l'axe longitudinal du fuselage par rapport à une surface extérieure de la seconde section de la peau de telle sorte qu'une surface extérieure desdits moyens de jonction est positionnée au même niveau que ladite surface extérieure de la seconde section de la peau.

La surface extérieure du fuselage est ainsi lisse, évitant ainsi des perturbations aérodynamiques.

On peut prévoir en outre que le tronçon de fuselage comprenne un cadre raidisseur du fuselage, auquel cas une extrémité de l'élément raidisseur peut venir jouxter le cadre. On tire dans ce cas un avantage particulier de la structure proposée ci-dessus.

Le cadre raidisseur du fuselage peut s'étendre dans un plan transversal (dénommé cadre dans la suite) et comportant un corps s'étendant dans un plan transversal à l'axe longitudinal du fuselage, et une semelle s'étendant dans un plan longitudinal à l'axe longitudinal du fuselage.

Selon une solution envisageable, les moyens de jonction sont montés au niveau dudit cadre raidisseur.

Ainsi, grâce à la présence de ce cadre raidisseur au niveau des moyens de jonction, le fuselage est stable au niveau de la zone de jonction entre deux tronçons de fuselage.

Selon un mode de réalisation, la surface intérieure des moyens de jonction est fixée sur ladite semelle dudit cadre raidisseur.

Ceci permet notamment de faciliter l'assemblage de deux tronçons de fuselage grâce au pré-assemblage du cadre sur les moyens de jonction (en pratique une virole).

Selon un autre mode de réalisation, la semelle du cadre raidisseur est montée sur la surface interne de la peau de la première section.

Cette disposition du cadre, permet de rapprocher d'autant plus le tronçon de fuselage au tronçon de fuselage adjacent. La peau des deux tronçons adjacents est alors rapprochée, et les charges mécaniques sont alors transmises plus efficacement entre les tronçons de fuselage.

Par ailleurs, lorsque l'élément de fuselage est assemblé à un second élément de fuselage au moyen des moyens de jonction, l'assemblage est simplifié du fait que le cadre est monté sur l'élément de fuselage.

En outre, on évite la tolérance du positionnement du cadre sur les moyens de jonction, et par conséquent, on réduit la somme des tolérances transversales du positionnement des moyens de jonction par rapport au tronçon de fuselage.

Selon un autre mode de réalisation, l'élément de fuselage comporte une couronne s'étendant vers l'axe longitudinal du fuselage, dans un plan transversal à l'axe longitudinal du fuselage, adaptée à fixer le corps du cadre raidisseur.

Dans ce mode de réalisation, le cadre ne comporte pas de semelle. De ce fait, l'élément de fuselage peut être rapproché de l'élément de fuselage adjacent. Ainsi, la peau et les lisses des deux tronçons sont rapprochées respectivement, permettant que les charges mécaniques soient transmisses entre les tronçons plus efficacement.

En outre, le positionnement du cadre sur la couronne disposée dans un plan transversal à l'axe longitudinal du fuselage, n'entraine pas d'impact sur la tolérance transversale du positionnement des moyens de jonction par rapport au tronçon de fuselage.

Dans un mode de réalisation, les moyens de jonction comportent un élément de jonction.

Dans un autre mode de réalisation, les moyens de jonction comportent une section de peau située à l'extrémité du tronçon de fuselage adjacent.

La présente invention vise selon un deuxième aspect une portion de fuselage comportant un élément de fuselage conforme à l'invention et un second tronçon de fuselage étant raccordé à la peau du tronçon de fuselage de l'élément de fuselage.

Selon une solution envisageable, le second tronçon s'étend le long de l'axe longitudinal du fuselage et la peau comporte au moins une première section, à au moins une extrémité dudit tronçon, en contact avec un élément de jonction et une seconde section qui n'est pas en contact avec l'élément de jonction. L'élément de jonction est en contact avec une surface extérieure de ladite au moins une première section de la peau, et la surface extérieure de la au moins une première section de la peau est décalée transversalement vers l'axe longitudinal du fuselage par rapport à une surface extérieure de la seconde section de la peau, de telle sorte qu'une surface extérieure dudit élément de jonction est positionnée au même niveau que ladite surface extérieure de la seconde section de la peau.

Selon une autre solution envisageable, le second tronçon s'étend le long de l'axe longitudinal du fuselage et la peau comporte au moins une première section, à au moins une extrémité du tronçon, en contact avec la première section du premier tronçon.

La présente invention vise selon un troisième aspect un fuselage d'aéronef comportant au moins une portion de fuselage conforme à l'invention.

La présente invention vise selon un quatrième aspect un aéronef comportant un fuselage conforme à l'invention.

Cette portion de fuselage, ce fuselage d'aéronef et cet aéronef présentent des caractéristiques et avantages analogues à ceux décrits précédemment en relation avec l'élément de fuselage.

D'autres particularités et avantages de l'invention apparaîtront encore dans la description ci-après.

Aux dessins annexés, donnés à titre d'exemples non limitatifs :
- la figure 1 est un schéma illustrant une portion d'élément de fuselage raccordé à un second élément de fuselage appartenant à l'art antérieur;
- la figure 2 représente un détail d'un élément de fuselage appartenant à l'art antérieur ;
- la figure 3 est un schéma illustrant une portion d'élément de fuselage raccordé à un second élément de fuselage appartenant à l'art antérieur ;
- la figure 4 est un schéma illustrant des tronçons de fuselage d'un aéronef ;
- la figure 5 est un schéma illustrant un premier mode de réalisation conforme à l'invention ;
- la figure 6 est un schéma illustrant un second mode de réalisation conforme à l'invention ;
- la figure 7 est un schéma illustrant un troisième mode de réalisation conforme à l'invention ;
- la figure 8 est un schéma illustrant un quatrième mode de réalisation conforme à l'invention ;
- la figure 9 est un schéma illustrant un cinquième mode de réalisation conforme à l'invention ;
- la figure 10 est un schéma illustrant un sixième mode de réalisation conforme à l'invention ;
- la figure 11 est un schéma illustrant un septième mode de réalisation conforme à l'invention ;
- les figures 12a, 12b et 12c représentent un schéma illustrant une coupe longitudinale d'une portion d'élément de fuselage raccordé à un second élément de fuselage entre deux raidisseurs longitudinaux conforme à l'invention ; et
- la figure 13 représente en détail la figure 12b.

La figure 4 représente plusieurs tronçons 1a, 1b de fuselage. Ces tronçons de fuselage sont assemblés entre eux afin de former le fuselage d'un aéronef. Deux tronçons 1a, 1b de fuselage sont assemblés au moyen des moyens de jonction (non représenté sur la figure 4) comme il sera décrit ci-dessous.

Les tronçons de fuselage s'étendent le long d'un axe longitudinal X.

Ici, la forme des tronçons de fuselage est cylindrique, et par conséquent les moyens de jonction présentent la même forme.

Néanmoins, les tronçons de fuselage, ainsi que les moyens de jonction, peuvent présenter des formes différentes.

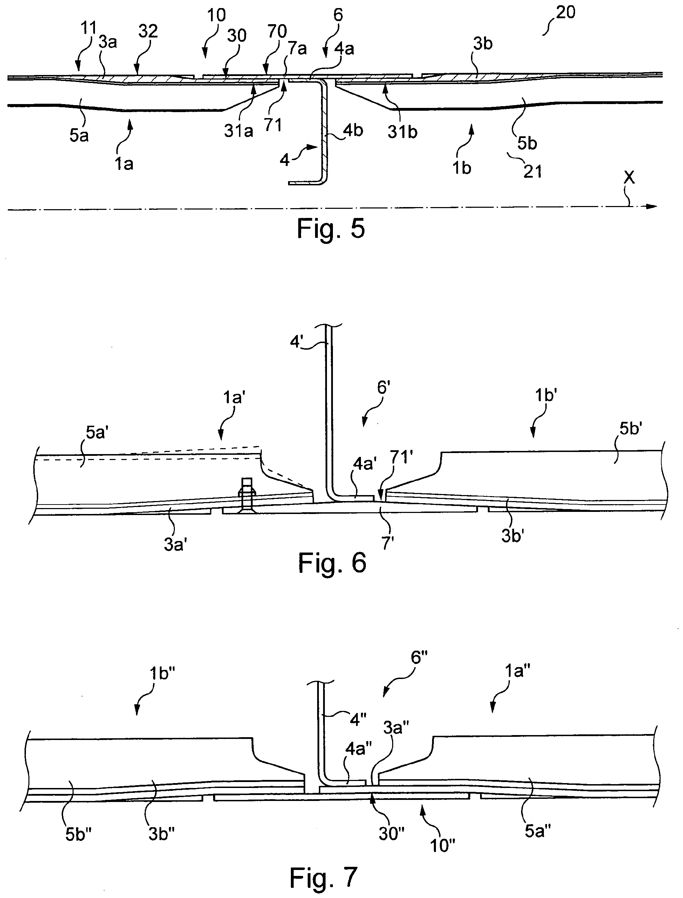

On va décrire en référence à la figure 5 un première mode de réalisation conforme à l'invention.

La figure 5 représente une vue en coupe longitudinale d'une portion de fuselage. On notera qu'une vue en coupe longitudinale d'une portion de fuselage comporte deux parties symétriques entre elles par rapport à l'axe longitudinal X du fuselage. La figure 5 représente seulement une partie de la vue en coupe longitudinale.

La référence 20 représente l'extérieur du fuselage (par exemple l'air ambiant) et la référence 21 représente l'intérieur du fuselage, c'est-à-dire l'habitacle de l'aéronef.

Un premier tronçon 1a de fuselage est raccordé à un second tronçon 1b de fuselage au moyen des moyens de jonction 6.

Dans ce mode de réalisation, les moyens de jonction sont un élément de jonction 6. Ici, l'élément de jonction 6 comporte une virole 7a.

Par simplicité, on va décrire le premier tronçon 1a de fuselage, dès lors que le second tronçon 1b est similaire.

Le tronçon 1a de fuselage comporte une peau 3a, des raidisseurs qui s'étendent dans des plans longitudinaux ou lisses 5a, et des raidisseurs qui s'étendent dans des plans transversaux ou cadre 4 (visible sur cette figure au niveau de l'élément de jonction 6).

La peau 3a du tronçon 1a de fuselage comporte au moins une première section 10 située à l'extrémité du tronçon 1a et une seconde section 11.

Ici, il est représenté une portion de chaque tronçon 1a, 1b. Ainsi, seulement une extrémité des tronçons 1a, 1b est représentée. L'extrémité non visible du tronçon 1a, 1b peut être ou non conçue de manière identique à la première section 10.

La première section 10 est décalée transversalement vers l'intérieur 21 du fuselage par rapport à la seconde section 11. Ainsi, par exemple, lorsque le fuselage présente une forme cylindrique, le diamètre d'une section transversale de la première section 10 est inférieur au diamètre d'une section transversale de la seconde section 11.

A titre d'exemple nullement limitatif, le diamètre de la première section 10 est de 4000 mm et celui de la seconde section est de 4008 mm.

Ainsi, la première section 10 est enfoncée vers l'intérieur du fuselage par rapport à la seconde section 11. Dans un mode de réalisation, ceci permet à une virole 7a de venir se loger dans le renfoncement, de sorte que la surface extérieure 70 de la virole 7a soit à la même distance de l'axe du fuselage, que la surface extérieure 32 de la seconde section 11 de tronçon. On notera que la surface intérieure 71 de la virole 7a est en contact avec la surface extérieure 30 de la peau 3a de la première section 10

Selon une variante, le décalage entre la première 10 et la seconde section 11, c'est-à-dire la différence entre les diamètres des sections transversales des première et seconde sections respectivement, est sensiblement similaire à l'épaisseur de la virole (mentionnée ci-après).

Selon une seconde variante, l'épaisseur de la virole 7a est inférieure au décalage entre la première 10 et la seconde 11 section. Dans ce cas, d'autres éléments, ici de formes cylindriques, sont disposés entre la virole et la peau.

Ainsi, la surface extérieure du fuselage est continue et on évite des perturbations aérodynamiques.

On notera que la virole 7a est en contact avec la surface extérieure 30 de la première section 30, ce contact pouvant être direct (c'est-à-dire qu'il n'existe pas d'autre élément entre elles) ou indirect (c'est-à-dire que d'autres éléments sont placés entre elles).

Comme indiqué ci-dessus, afin de relier les premier 1a et second 1b tronçons, un élément de jonction 6 est disposé entre les deux tronçons 1a, 1b de fuselage. Cet élément de jonction 6 comporte une virole 7a située en contact avec la surface externe 30 de la peau 3a du tronçon 1a et de la peau 3b du second tronçon 1b.

Ainsi, la peau 3a du premier tronçon 1a et la peau 3b du second tronçon 1b sont reliées par la virole 7a. La virole 7a assure la continuité mécanique entre deux tronçons 1a, 1b adjacents.

Par conséquent, une charge mécanique supportée par la peau 3a du premier tronçon 1a, est transmise à la peau 3b du second tronçon 1b à travers la virole 7a. Le fuselage est alors stable au niveau de l'élément de jonction 6a pour un niveau de charges données. La stabilité est nettement améliorée par rapport à une jonction avec arrêt de lisses au niveau de l'élément de jonction et avec une virole interne.

Par ailleurs, dès lors que la virole 7a est disposée en contact avec la surface extérieure 30 de la peau 3a, 3b des tronçons 1a, 1b de fuselage, les extrémités des tronçons de fuselage peuvent se rapprocher entre elles.

Par conséquent, la peau 3a, 3b et les lisses 5a, 5b de deux tronçons 1a, 1b adjacents ne sont séparés que par le cadre décrit plus loin, et sont donc plus proches que dans l'art antérieur. La transmission des charges mécanique entre tronçons adjacents est alors plus efficace.

A titre d'exemple nullement limitatif, la virole 7a est couverte par les lisses 5a, 5b sur environ 80% de sa longueur. Environ 40% correspond à une première lisse 5a et 40% à une seconde lisse 5b.

Dans cet exemple, l'élément de jonction 6 est disposé au niveau d'un cadre 4.

Ainsi, les charges mécaniques à transmettre entre deux tronçons 3a, 3b de fuselage sont réparties entre la virole 7a et le cadre 4. La stabilité du fuselage au niveau de la jonction 6 est donc augmentée.

Ici, le cadre 4 comporte notamment une semelle 4a et un corps 4b. La semelle 4a correspond à la partie du cadre 4 qui s'étend dans un plan longitudinal et le corps 4b à la partie qui s'étend dans un plan transversal.

Dans cet exemple, la semelle 4a est fixée sur la surface intérieure 71 de la virole 7a.

Néanmoins, la semelle 4a du cadre 4 pourrait être fixée sur la surface intérieure 31a, 31b de la peau 3a, 3b de l'un des tronçons 1a, 1b.

Le renfoncement de la première section 10 des tronçons 1a, 1b par rapport à la seconde section 11 peut être réalisé par des techniques différentes, en fonction notamment du matériau dans lequel le fuselage est fabriqué.

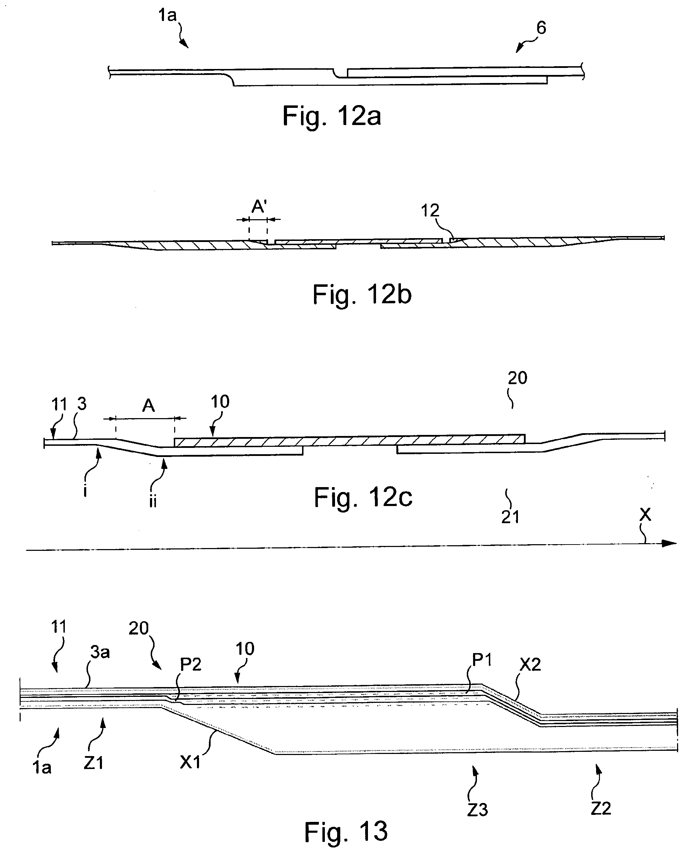

Ceci sera décrit en détail ci-dessous en référence aux figures 12a, 12b, 12c et 13.

Un deuxième mode de réalisation est représenté à la figure 6. La conception de ce mode de réalisation est identique à celle du mode de réalisation représenté sur la figure 5.

Ainsi, la virole 7' relie la peau 3a', 3b' des deux tronçons 1a', 1b' et la semelle 4a' du cadre 4' est fixée à la surface intérieure 71' de la virole 7'.

Dans ce mode de réalisation la virole 7' présente une surface intérieure 71' convexe, n'étant pas parallèle à l'axe longitudinal X du fuselage.

Dans ce mode de réalisation, la virole 7' présente une forme conique et permet d'avoir moins d'irrégularités sur la peau du fuselage. Ainsi, les perturbations sont moins importantes.

En outre, la forme conique permet de faciliter l'assemblage de deux tronçons adjacents 1a', 1b'.

Ainsi, par exemple, dans un premier temps, la virole 7' est assemblée à l'extrémité d'un des tronçons de fuselage (par exemple, le premier tronçon 1a'). Dans un second temps, le second tronçon 1b' est assemblé, en ajustant la position le long de la virole 7' (selon l'axe longitudinal X) afin que les surfaces extérieures de la peau 3a', 3b' des tronçons 1a', 1b' soient au même niveau.

Ainsi, les jeux radiaux existant entre la virole 7' et la peau du fuselage sont compensés.

Ce mode de réalisation, comme le mode de réalisation précédent, permet aux lisses 5a', 5b' des deux tronçons 1a', 1b' d'être positionnées proches l'une de l'autre, et par conséquent proches du cadre 4'. Ainsi, les charges mécaniques sont transmises efficacement entre les deux tronçons 1a', 1b'.

Un troisième mode de réalisation est représenté à la figure 7. La conception de ce mode de réalisation est identique à celles des modes de réalisation représentés sur les figures 5 et 6.

Dans ce mode de réalisation la peau 3a" d'un premier tronçon 1a" est prolongée longitudinalement de sorte que le cadre 4" est fixé à la peau 3a" par sa semelle 4a".

Ainsi, la distance entre ce tronçon 1a" et le tronçon adjacent 1b" peut être réduite, rendant plus stable le fuselage au niveau de la jonction 6".

En effet, la peau 3a", 3b", ainsi que les lisses 5a", 5b" des deux tronçons 1a", 1b" sont rapprochées.

En outre, le cadre 4" étant préfixé au premier tronçon 1a", un élément de moins doit être fixé transversalement lors de l'assemblage de deux tronçons adjacents 1a", 1b". Cela évite l'introduction d'une tolérance transversale du positionnement du cadre 4" au niveau de la jonction.

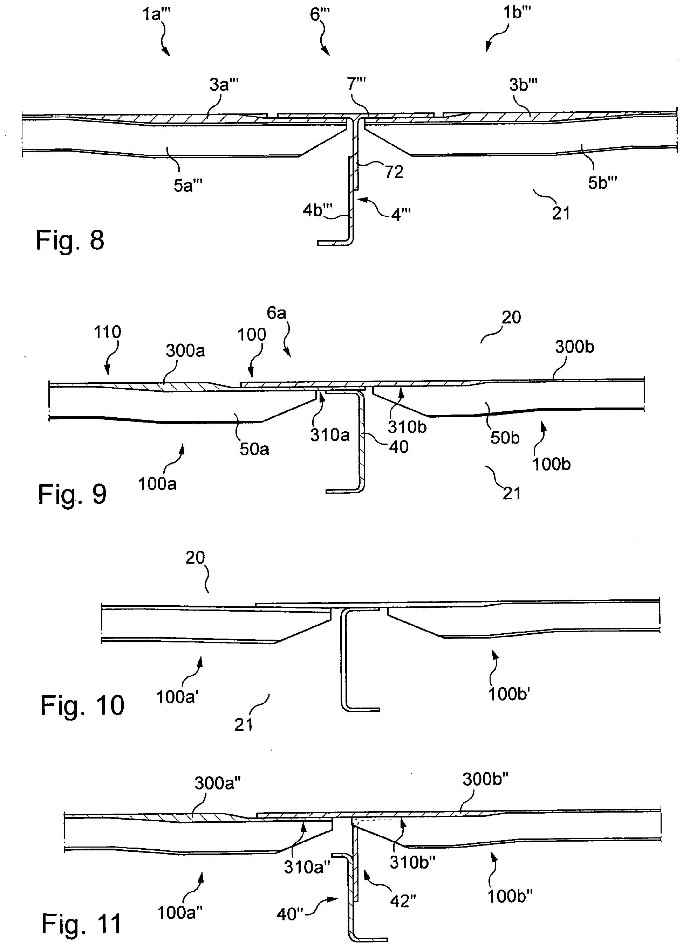

La figure 8 illustre un quatrième mode de réalisation. La conception de ce mode de réalisation est identique à celles des modes de réalisation représentés sur les figures 5, 6 et 7.

Dans ce mode de réalisation, l'élément de jonction 6''' comporte une couronne 72 réalisée d'une pièce avec la virole 7'''. La couronne 72 s'étend dans un plan transversal à la virole 7''' (ou transversal à l'axe longitudinal X du fuselage) vers l'intérieur 21 du fuselage.

Dans cet exemple, le cadre 4''' (qui ne présente pas semelle) est fixé par son corps 4b''' à la couronne 72. Ainsi cette couronne 72 comporte des moyens de fixation (non visibles sur la figure), comme par exemple des moyens de clipsage.

Grâce à la fixation du cadre 4''' à la couronne 72 de la virole 7''', on évite la tolérance transversale du positionnement du cadre 4''' sur l'élément de jonction 6'''.

En outre, du fait de l'absence de semelle dans le cadre 4''', les lisses 5a''', 5b''' des deux tronçons 1a''', 1b''' sont très rapprochées entre elles.

On va décrire en référence à la figure 9 un cinquième mode de réalisation.

Comme pour les modes de réalisation précédents, la peau 300a d'un premier tronçon 100a de fuselage comporte une première section 100 située à l'extrémité du premier tronçon 100a et une seconde section 110. De la même manière, la première section 100 est décalée vers l'intérieur 21 du fuselage par rapport à la seconde section 110.

Dans ce mode de réalisation, les moyens de jonction 6a comportent une section du tronçon 100b de fuselage adjacent.

Ainsi, dans ce mode de réalisation, la peau 300b d'un second tronçon 100b de fuselage vient se loger dans le renfoncement formé par la première section 100 du premier tronçon 100a où les peaux 300a, 300b sont fixées l'une à l'autre.

Dans ce mode de réalisation, le cadre 40 est fixé à la surface intérieure 310a de la première section 100 de la peau 300a du premier tronçon 100a de fuselage.

Néanmoins, le cadre 40 peut être fixé à la surface intérieure 310b de la peau 300b du second tronçon 100b de fuselage.

Cette configuration présente l'avantage de rapprocher au maximum la peau 300a, 300b de deux tronçons 100a, 100b de fuselage puisqu'elles sont au contact. Entre outre, les lisses 50a, 50b sont rapprochées du cadre 40 comme dans les exemples précédents.

Par conséquent, la stabilité du fuselage au niveau de la jonction 6a est améliorée.

Ceci, comme indiqué ci-dessous améliore le comportement mécanique du fuselage au niveau de la jonction, c'est-à-dire que la transmission des charges mécaniques est efficace.

En outre, le nombre de pièces à assembler lors de l'assemblage de deux tronçons 100a, 100b de fuselage est réduit, et par conséquent, la durée de temps d'assemblage est réduite.

De la même manière que dans les cas où on utilise une virole dans l'élément de jonction, dès lors que la surface extérieure du fuselage est continue, les perturbations aérodynamiques sont évitées.

La figure 10 représente un sixième mode de réalisation proche du mode de réalisation représenté à la figure 6, mais dans le cas de l'élément de jonction comportant une section du tronçon de fuselage adjacent.

Ici, l'extrémité du premier 100a' et second 100b' tronçons de fuselage présente une forme conique complémentaire. Ainsi, dans cet exemple, l'extrémité du premier tronçon 100a' est courbé vers l'intérieur du fuselage 21 (forme conique extérieure) et l'épaisseur de la peau situé à l'extrémité du second tronçon 100b' de fuselage diminue lorsque l'on s'approche de l'extrémité (forme conique intérieure). L'extrémité du second tronçon 100b' présente une forme cylindrique à l'extérieur.

Les avantages de ce mode de réalisation correspondant aux avantages du mode de réalisation précédant et de celui décrit en référence à la figure 6.

La figure 11 représente un septième mode de réalisation dans lequel l'élément de jonction comporte une section de tronçon de fuselage adjacent.

Ici, le cadre 40" est un cadre flottant qui est fixé sur la surface intérieure 310b" de la peau 300b" du second tronçon 100b" de fuselage au moyen d'une pièce de jonction 42" appelé *"clip".*

Dans une variante, le cadre 40" peut être fixé sur la surface intérieure 310a" de la peau 300a" du premier tronçon 100a" de fuselage.

Ce mode de réalisation réunit les avantages du quatrième (figure 8) mode de réalisation.

En outre, l'extrémité des raidisseurs longitudinaux ou lisses du second tronçon 100b" est encore plus proche de l'extrémité de l'autre tronçon de fuselage 100a", par exemple par rapport au cinquième mode de réalisation (figure 9).

Bien entendu, l'élément de jonction peut comporter une virole au lieu de la section de tronçon de fuselage adjacent. Le cadre 40" flottant pourrait alors être fixé sur la virole ou sur la surface intérieure de la peau d'un des tronçons.

Dans ce mode de réalisation, les extrémités des tronçons de fuselage peuvent présenter une forme conique complémentaire comme dans le mode de réalisation représenté à la figure 10.

On va décrire ensuite la manière de réaliser l'enfoncement par usinage de la première section des tronçons de fuselage par rapport à la seconde section.

Ainsi, par exemple lorsque le fuselage est métallique, l'enfoncement est réalisé par usinage. Le fuselage résultant d'une telle technique est représenté à la figure 12a.

On notera qu'afin de réaliser l'enfoncement dans un fuselage métallique, il est nécessaire de partir d'un panneau de forte épaisseur. L'extrémité du tronçon de fuselage peut être aussi réalisée par déformation locale de la peau (figure 12c).

Par exemple, lorsque le fuselage est en composite, l'enfoncement est réalisé au moyen de prises et lâchés de plis (le fuselage résultant d'une telle technique est représenté à la figure 12b) ou au moyen d'un soyage par déformation locale de la peau (le fuselage résultant d'une telle technique est représenté à la figure 12c). On notera que le profil d'extrémité obtenu est similaire pour le fuselage métallique ou composite dans le cas d'une déformation locale de la peau (figure 12c).

Dans les deux derniers cas, les jeux A, A' générés lors de la réalisation du renfoncement sont variables en fonction de la zone du fuselage et des caractéristiques des outils pour réaliser l'enfoncement.

Ces jeux A, A', pouvant provoquer des perturbations aérodynamiques, sont réduits au maximum, par exemple en les comblant à l'aide de mastics ou en rajoutant des onglets 12 (visibles sur la figure 12b).

L'inclinaison de la peau 3 de fuselage située entre les première 10 et seconde 11 sections de fuselage, peut présenter des valeurs similaires ou différentes à l'intérieur 21 et à l'extérieur 20 du fuselage.

Dans le cas du fuselage de la figure 12c, les discontinuités i, ii provoquent l'introduction de moments. Afin de minimiser ces moments, on utilise le fuselage de la figure 12b.

La figure 13 représente la portion du fuselage de la figure 12b en détail.

Cette portion de fuselage comporte trois zones. Une première zone ou zone typique Z1 correspondant à la seconde section 11 de la peau 3a du premier tronçon 1a de fuselage.

Une seconde zone ou zone de jonction Z2, correspondant à la première section 10 de la peau 3a du premier tronçon 1a de fuselage.

Enfin, une troisième zone ou zone de transition Z3 est située entre les deux zones Z1, Z2 précédentes.

Dans cette technique, des plis intercalaires P1 (en trait discontinu) sont introduits entre les plis P2 (en trait continu) présents dans la zone typique Z1, de façon alternée afin de respecter les règles de drapage.

Les plis s'étendent longitudinalement et forment la peau 3 du fuselage.

Les plis P2 de la zone typique Z1 sont continus jusqu'à l'extrémité du tronçon 1a de fuselage.

A titre d'exemple nullement limitatif, 26 plis intercalaires P1 sont introduits dans la zone de transition Z3 et s'étendent jusqu'à l'extrémité du tronçon, et 26 autres plis intercalaires P1 sont introduits dans la zone de transition Z3 et sont présents seulement dans cette zone. Ces plis intercalaires P1 sont concentriques et sensiblement parallèles les uns aux autres. Ils sont introduits afin de renforcer la peau.

Par exemple, l'inclinaison de la peau à l'intérieur 21 du fuselage (pente x1) présente une valeur de 10%, l'inclinaison de la peau à l'extérieur 20 du fuselage (pente x2) présentant une valeur de 20%.

Bien entendu, le nombre de plis et les valeurs d'inclinaison peuvent varier selon les modes de réalisation. En effet, ces techniques évoluent très rapidement et par conséquent ses valeurs varient très rapidement dans le temps.

Ainsi, grâce à la présente invention, il est possible d'assembler deux tronçons de fuselage adjacents au moyen des moyens de jonction qui présentent une stabilité élevée.

Par ailleurs, les moyens de jonction ne relient pas les lisses des deux tronçons, limitant ainsi l'augmentation de masse.

En outre, la difficulté d'assemblage est réduite, et par conséquent le temps d'assemblage est également réduit.

Bien entendu, de nombreuses modifications peuvent être apportées à l'exemple de réalisation décrit précédemment sans sortir du cadre de l'invention.

Ainsi, par exemple, comme déjà indiqué, les formes du fuselage peuvent être différentes.

## Revendications

1. Elément de fuselage comportant un tronçon de fuselage (1a, 1a', 1a", 1a''', 100a, 100a') comportant une peau (3a, 3a', 3a", 3a''', 300a), et des moyens de jonction (6a, 6, 6', 6", 6"') aptes à raccorder la peau dudit tronçon (1a, 1a', 1a", 1a''', 100a, 100a') à un tronçon (1b, 1b', 1b", 1b''') adjacent, ledit tronçon (1a, 1a', 1a", 1a''') s'étendant le long de l'axe longitudinal (X) du fuselage, et la peau (3a, 3a', 3a", 3a''', 300a) comportant au moins une première section (10, 100), à au moins une extrémité dudit tronçon (1a, 1a', 1a", 1a''', 100a, 100a'), le tronçon (1a, 1a', 1a", 1a''', 100a, 100a') de fuselage comportant au moins un élément longitudinal raidisseur (5a, 5a', 5a", 5a''', 50a') du fuselage, lesdits moyens de jonction (6a, 6, 6', 6", 6''') comportant un élément de jonction (7a, 7', 7", 7''') destiné à relier ledit tronçon de fuselage audit tronçon adjacent, l'élément de fuselage étant **caractérisé en ce que** ledit élément de jonction (7a, 7', 7", 7''') est placé au contact d'une surface extérieure (30) de ladite première section (10, 100) de la peau (3a, 3a', 3a", 3a''', 300a, 300a') et **en ce que** l'élément longitudinal raidisseur (5a, 5a', 5a", 5a''', 50a') est une lisse s'étendant en partie au niveau de l'élément de jonction (7a, 7', 7", 7''') selon l'axe longitudinal (X), les projections respectives, sur l'axe longitudinal (X), de la lisse (5a, 5a', 5a", 5a''', 50a') et de l'élément de jonction (7a, 7', 7", 7''') se chevauchent en partie.

2. Elément de fuselage conforme à la revendication 1, **caractérisé en ce que** la peau comporte une seconde section (11, 110) qui n'est pas en contact avec les moyens de jonction et **en ce que** la surface extérieure (30) de ladite au moins une première section (10, 100) de la peau (3a, 3a', 3a", 3a''', 300a, 300a') est décalée transversalement vers l'axe longitudinal (X) du fuselage par rapport à une surface extérieure (32) de la seconde section (11, 110) de la peau (3a, 3a', 3a", 3a''', 300a, 300a') de telle sorte qu'une surface extérieure (70) desdits moyens de jonction (6a, 6, 6', 6", 6''') est positionnée au même niveau que ladite surface extérieure de la seconde section (32) de la peau (3a, 3a', 3a", 3a''', 300a, 300a').

3. Elément de fuselage conforme à la revendication 1 ou 2, **caractérisé en ce qu'**il comprend un cadre raidisseur du fuselage (4, 4', 4", 4''', 40, 40").

4. Elément de fuselage conforme à la revendication 3, **caractérisé en ce qu'**une extrémité de l'élément raidisseur (5a, 5a', 5a", 5a''', 50a') jouxte le cadre (4, 4', 4", 4''', 40).

5. Elément de fuselage conforme à la revendication 3 ou 4, **caractérisé en ce que** le cadre raidisseur du fuselage (4, 4', 4", 4''', 40, 40") comporte un corps (4b, 4b', 4b", 4b''') s'étendant dans un plan transversal à l'axe longitudinal (X) du fuselage, et une semelle (4a, 4a', 4a") s'étendant dans un plan longitudinal à l'axe longitudinal (X) du fuselage.

6. Elément de fuselage conforme à la revendication 5, **caractérisé en ce qu'**une surface intérieure (71, 71') desdits moyens de jonction (6a, 6, 6', 6", 6''') sont fixés sur ladite semelle (4a, 4a') dudit cadre raidisseur (4, 4', 40").

7. Portion de fuselage, **caractérisée en ce qu'**elle comporte un élément de fuselage conforme à l'une des revendications 1 à 6, et un second tronçon (1b, 1b', 1b", 1b''') de fuselage adjacent, la peau (3b, 3b', 3b", 3b''') du second tronçon (1b, 1b', 1b", 1b''') de fuselage étant raccordée à la peau (3a, 3a', 3a", 3a''') du tronçon de fuselage (1a, 1a', 1a", 1a''') dudit élément de fuselage.

8. Aéronef **caractérisé en ce qu'**il comporte une portion de fuselage selon la revendication 7.

## Patentansprüche

1. Rumpfelement, welches ein Rumpfsegment (1a, 1a', 1a", 1a''', 100a, 100a'), das eine Haut (3a, 3a', 3a", 3a''', 300a) aufweist, und Verbindungsmittel (6a, 6, 6', 6", 6'''), die geeignet sind, die Haut des Segments (1a, 1a', 1a", 1a''', 100a, 100a') an ein benachbartes Segment (1b, 1b', 1b", 1b''') anzuschießen, aufweist, wobei sich das Segment (1a, 1a', 1a", 1a''') entlang der Längsachse (X) des Rumpfes erstreckt und die Haut (3a, 3a', 3a", 3a''', 300a) wenigstens einen ersten Abschnitt (10, 100) an wenigstens einem Ende des Segments (1a, 1a', 1a", 1a''', 100a, 100a') aufweist, wobei das Rumpfsegment (1a, 1a', 1a", 1a''', 100a, 100a') wenigstens ein Längsversteifungselement (5a, 5a', 5a", 5a''', 50a') des Rumpfes aufweist, wobei die Verbindungsmittel (6a, 6, 6', 6", 6''') ein Verbindungselement (7a, 7', 7", 7''') aufweisen, das dazu bestimmt ist, das Rumpfsegment mit dem benachbarten Segment zu verbinden, wobei das Rumpfelement **dadurch gekennzeichnet ist, dass** das Verbindungselement (7a, 7', 7", 7''') in Kontakt mit einer Außenfläche (30) des ersten Abschnitts (10, 100) der Haut (3a, 3a', 3a", 3a''', 300a, 300a') angeordnet ist, und dadurch, dass das Längsversteifungselement (5a, 5a', 5a", 5a''', 50a') ein Stringer ist, der sich teilweise am Verbindungselement (7a, 7', 7", 7''') entlang der Längsachse (X) erstreckt, wobei sich die jeweiligen Projektionen des Stringers (5a, 5a', 5a", 5a''', 50a') und des Verbindungselements (7a, 7', 7", 7"') auf die Längsachse (X) teilweise überlappen.

2. Rumpfelement nach Anspruch 1, **dadurch gekennzeichnet, dass** die Haut einen zweiten Abschnitt (11, 110) aufweist, welcher nicht mit den Verbindungsmitteln in Kontakt steht, und dadurch, dass die Außenfläche (30) des wenigstens einen ersten Abschnitts (10, 100) der Haut (3a, 3a', 3a", 3a''', 300a, 300a') in Querrichtung zur Längsachse (X) des Rumpfes hin in Bezug auf eine Außenfläche (32) des zweiten Abschnitts (11, 110) der Haut (3a, 3a', 3a", 3a''', 300a, 300a') versetzt ist, derart, dass eine Außenfläche (70) der Verbindungsmittel (6a, 6, 6', 6", 6''') auf demselben Niveau wie die Außenfläche des zweiten Abschnitts (32) der Haut (3a, 3a', 3a", 3a''', 300a, 300a') positioniert ist.

3. Rumpfelement nach Anspruch 1 oder 2, **dadurch gekennzeichnet, dass** es einen Versteifungsspant des Rumpfes (4, 4', 4", 4''', 40, 40") umfasst.

4. Rumpfelement nach Anspruch 3, **dadurch gekennzeichnet, dass** ein Ende des Versteifungselements (5a, 5a', 5a", 5a''', 50a') an den Spant (4, 4', 4", 4''', 40) angrenzt.

5. Rumpfelement nach Anspruch 3 oder 4, **dadurch gekennzeichnet, dass** der Versteifungsspant des Rumpfes (4, 4', 4", 4''', 40, 40") einen Körper (4b, 4b', 4b", 4b'''), der sich in einer quer zur Längsachse (X) des Rumpfes verlaufenden Ebene erstreckt, und einen Gurt (4a, 4a', 4a") der sich in einer längs zur Längsachse (X) des Rumpfes verlaufenden Ebene erstreckt, aufweist.

6. Rumpfelement nach Anspruch 5, **dadurch gekennzeichnet, dass** eine Innenfläche (71, 71') der Verbindungsmittel (6a, 6, 6', 6", 6''') an dem Gurt (4a, 4a') des Versteifungsspants (4, 4', 40") befestigt ist.

7. Rumpfabschnitt, **dadurch gekennzeichnet, dass** er ein Rumpfelement nach einem der Ansprüche 1 bis 6 und ein benachbartes zweites Rumpfsegment (1b, 1b', 1b", 1b''') aufweist, wobei die Haut (3b, 3b', 3b", 3b''') des zweiten Rumpfsegments (1b, 1b', 1b", 1b''') an die Haut (3a, 3a', 3a", 3a''') des Rumpfsegments (1a, 1a', 1a", 1a''') des Rumpfelements angeschlossen ist.

8. Luftfahrzeug, **dadurch gekennzeichnet, dass** es einen Rumpfabschnitt nach Anspruch 7 aufweist.

## Claims

1. Fuselage element comprising a fuselage segment (1a, 1a', 1a", 1a''', 100a, 100a') comprising a skin (3a, 3a', 3a", 3a''', 300a) and joining means (6a, 6, 6', 6", 6''') that are able to connect the skin of said segment (1a, 1a', 1a", 1a''', 100a, 100a') to an adjacent segment (1b, 1b', 1b", 1b'''), said segment (1a, 1a', 1a", 1a''') extending along the longitudinal axis (X) of the fuselage, and the skin (3a, 3a', 3a", 3a''', 300a) comprising at least one first section (10, 100), at at least one end of said segment (1a, 1a', 1a", 1a''', 100a, 100a'), the fuselage segment (1a, 1a', 1a", 1a''', 100a, 100a') comprising at least one longitudinal element (5a, 5a', 5a", 5a''', 50a') for stiffening the fuselage, said joining means (6a, 6, 6', 6", 6''') comprising a joining element (7a, 7', 7", 7''') that is designed to connect said fuselage segment to said adjacent segment, the fuselage element being **characterised in that** said joining element (7a, 7', 7", 7''') is placed in contact with an outer surface (30) of said first section (10, 100) of the skin (3a, 3a', 3a", 3a''', 300a, 300a'), and **in that** the longitudinal stiffening element (5a, 5a', 5a", 5a''', 50a') is a stringer extending in part at the level of the joining element (7a, 7', 7", 7''') along the longitudinal axis (X), the respective projections, onto the longitudinal axis (X), of the stringer (5a, 5a', 5a", 5a''', 50a') and of the joining element (7a, 7', 7", 7''') partially overlapping.

2. Fuselage segment according to claim 1, **characterised in that** the skin comprises a second section (11, 110) which is not in contact with the joining means, and **in that** the outer surface (30) of said at least one first section (10, 100) of the skin (3a, 3a', 3a", 3a''', 300a, 300a') is offset transversely towards the longitudinal axis (X) of the fuselage with respect to an outer surface (32) of the second section (11, 110) of the skin (3a, 3a', 3a", 3a''', 300a, 300a'), such that an outer surface (70) of said joining means (6a, 6, 6', 6", 6''') is positioned at the same level as said outer surface of the second section (32) of the skin (3a, 3a', 3a", 3a''', 300a, 300a').

3. Fuselage segment according to claim 1 or 2, **characterised in that** it comprises a fuselage stiffening frame (4, 4', 4", 4''', 40, 40").

4. Fuselage segment according to claim 3, **characterised in that** one end of the stiffening element (5a, 5a', 5a", 5a''', 50a') abuts against the frame (4, 4', 4", 4''', 40).

5. Fuselage segment according to claim 3 or 4, **characterised in that** the fuselage stiffening frame (4, 4', 4", 4''', 40, 40") comprises a body (4b, 4b', 4b", 4b''') extending in a plane transverse to the longitudinal axis (X) of the fuselage, and a sole (4a, 4a', 4a'') extending in a plane longitudinal to the longitudinal axis (X) of the fuselage.

6. Fuselage segment according to claim 5, **characterised in that** an inner surface (71, 71') of said joining means (6a, 6, 6', 6", 6''') are secured to said sole (4a, 4a') of said stiffening frame (4, 4', 40'').

7. Fuselage portion, **characterised in that** it comprises a fuselage element according to one of claims 1 to 6, and a second, adjacent fuselage segment (1b, 1b', 1b", 1b'''), the skin (3b, 3b', 3b", 3b''') of the second fuselage segment (1b, 1b', 1b", 1b''') being connected to the skin (3a, 3a', 3a", 3a''') of the fuselage segment (1a, 1a', 1a", 1a''') of said fuselage element.

8. Aircraft, **characterised in that** it comprises a fuselage portion according to claim 7.
